# EUROPEAN PATENT SPECIFICATION

(11) **EP 3 462 757 B1**
(45) Date of publication and mention of the grant of the patent: **22.09.2021**
(21) Application number: 17194480.4
(22) Date of filing: 02.10.2017
(51) Int. Cl.: H04W 8/00, H04W 84/18

(54) **METHOD OF SELECTIVELY PAIRING A PLURALITY OF SENSORS TO A GATEWAY**
VERFAHREN ZUR SELEKTIVEN PAARUNG EINER VIELZAHL VON SENSOREN MIT EINEM GATEWAY
PROCÉDÉ D'APPARIEMENT SÉLECTIF D'UNE PLURALITÉ DE CAPTEURS À UNE PASSERELLE

(43) Date of publication of application: 03.04.2019
(73) Proprietor: Televic Healthcare NV, 8870 Izegem (BE)
(72) Inventor: Malik, Salman, B-9000 Gent (BE); Crombez, Pieter, 8820 Torhout (BE)
(74) Representative: IPLodge bv

(56) References cited:
- WO-A1-2013/138499
- US-A1- 2014 206 407
- US-A1- 2016 135 242
- US-A1- 2017 094 706

## Description

### Field of the invention

The present invention pertains to the field of wireless personal area networks, and in particular to methods of selectively pairing devices in such networks. It is applicable *inter alia* where a number of sensors (such as call units in a nurse call system) are to be paired with the appropriate gateway (such as a room controller in a nurse call system).

### Background

When a nurse call system using wireless call units is deployed, the commissioning step - which consists of pairing the call units with the appropriate room controller and providing appropriate configuration data to these devices - is a laborious process, which involves physically interacting with every individual device.

While various methods of automatically pairing wireless PAN devices are known in the art, none of these fully addresses the needs of wireless nurse call systems.

US patent no. 8,159,156 B2 discloses a method of commissioning a lighting system which includes causing a light source co-located with each luminaire to emit a signal, detecting the signal at light sensors co-located with each luminaire, converting the signals obtained by the light sensors into distance measurements between luminaires, creating a map recording the relative location of luminaires, and assigning luminaires to groups based on their relative locations in the map. This method relies on pairwise, light-based point-to-point distance measurements between all devices, which requires the presence of light sources and sensors as well as pairwise line-of-sight visibility between the devices. This is not practical for devices other than luminaires. Moreover, this method only provides a map with relative positions, but does not allow grouping based on absolute locations. Finally, the document does not describe how to store complex configuration parameters in the individual devices.

US patent application publication no. 2009/0066473 A1 discloses commissioning installed building service devices by establishing wireless communication between plural building service devices to determine spatial positions of each device relative to at least three reference nodes by triangulation of the signal. The coordinates of the determined spatial positions of each device are transmitted to a building services commissioning system, which generates a spatial position map of said devices. This map is then compared with a building services plan to obtain configuration data for each said device. Based on the configuration data, configuration commands are issued to each device to commission the system. This method requires at least three reference nodes with fixed, known positions. The determination of spatial positions by triangulation may not be accurate in indoor environments with obstacles and multipath interference.

International patent application publication no. WO 2015/198181 A1 discloses an automatic commissioning of a group of lighting units. The group may be commissioned based at least in part on the two or more lighting units emitting light having corresponding properties. The group may be commissioned based on the two or more lighting units being influenced by sensor events raised by two or more sensors within a predetermined time interval. This method requires additional sensors (e.g. motion sensors) to be present on the devices to be paired. Finally, the document does not describe how to store complex configuration parameters in the individual devices.

United States patent application publication no. US 2017/094706 A1, in the name of Ryan Yong Kim et al., relates to setup of IoT network devices, and specifically to setup of multiple similar IoT devices at substantially the same time using joint authentication. Embodiments include, for example, receiving, at an existing network device on a network, one or more communications, wherein the one or more communications include an indication that multiple new network devices are associated with the network; receiving an indication that the multiple new network devices have generated a setup access point; establishing a connection with the access point of each of the multiple new network devices; receiving identification information, wherein the identification information includes information identifying each of the multiple new network devices; and transmitting the identification information identifying each of the multiple new network devices, wherein when the identification information is received, the identification information facilitates generating an authentication query to authenticate one or more of the multiple new network devices. Kim et al. does not adequately deal with devices that are out of reach of an initial discovery message broadcast.

It is an object of embodiments of the present invention to at least partially overcome the disadvantage of the prior art methods.

### Summary

The invention is defined by the appended claims. According to an aspect of the present invention, there is provided a method of selectively pairing a plurality of sensors to a gateway from among a plurality of gateways in a wireless network, said sensors and said gateways being collectively referred to as devices, the method comprising: prior to receipt of a discovery message, keeping said plurality of devices in a non-transmitting state; transmitting a discovery message over said wireless network from a discovery initiating agent; at each of said plurality of devices that have received said discovery message, broadcasting a primary discovery response over said wireless network; determining respective proximities of said gateways to said discovery initiating agent and respective proximities of said sensors to said discovery initiating agent or one or more of said gateways, based on at least said primary discovery responses; selecting a gateway and a subset of said plurality of sensors on the basis of said respective proximities; and commissioning configuration parameters to said selected gateway and said subset of said plurality of sensors.

Throughout the present application, the sensors may in particular be the call units of a nurse call system in a hospital or similar setting. Throughout the present application, the gateway may in particular be a room controller of such a nurse call system. The discovery initiating agent may be a dedicated commissioning agent or an appropriately configured room controller. Throughout the present application, the wireless network may be a Bluetooth LE network.

It is an advantage of the present invention that physical interaction of an operator with every single device is no longer necessary. The operator may enter a room with a dedicated discovery initiating agent (which may be implemented as an application on a mobile device or a portable device with wireless networking capabilities), start the discovery, and cause the nearby devices to exchange the necessary proximity information with each other over the wireless network. Based on this exchanged proximity information, appropriate groups of sensors may be defined, and these groups - as well as their designated gateway - are then set up with the appropriate configuration parameters.

In the invention, the method according to the present invention further comprises: at devices from among said plurality of devices that have not received said discovery message but that have received a primary discovery response (hop 1), broadcasting a secondary discovery response (hop 2); at devices from among said plurality of devices that have not received said discovery message or a primary discovery response (hop 1) but that have received a secondary discovery response (hop 2) from a gateway out of range from said discovery initiating agent that has received a primary discovery response (hop 1) from at least one sensor, broadcasting a tertiary discovery response (hop 3); and said determining comprises: at said discovery initiating agent and said plurality of devices, determining neighbor information based on said primary, secondary, and/or tertiary discovery responses; broadcasting said neighbor information determined at said discovery initiating agent to gateways within range of said discovery initiating agent; comparing, at each of said gateways within range of said discovery initiating agent, said neighbor information of said respective gateway to said neighbor information of said discovery initiating agent; broadcasting said neighbor information determined at said gateways to sensors within range of said respective gateways; comparing, at each of said sensors within range of one or more gateways, said neighbor information of said respective sensor to said neighbor information of said respective one or more gateways; and providing a result of said comparing to said discovery initiating agent or said one or more gateways.

It is an advantage of this embodiment that information about devices that are outside the immediate range of the discovery initiating agent may be used to form more appropriate gateway/sensor groups.

In a particular embodiment, said providing comprises: transmitting, from each of said devices within range of said discovery initiating agent, a result of said comparing to said discovery initiating agent.

The result of the group formation carried out at the devices must be transmitted to the commissioning agent - which may be the same entity as the discovery initiating agent, or an entity communicating with the discovery initiating agent - to allow the commissioning process to complete.

In another particular embodiment, said providing comprises: transmitting, from each of said sensors, a result of said comparing to said respective one or more gateways; and transmitting, from said one or more gateways, said result of said comparing to said discovery initiating agent.

The result of the group formation carried out at the gateways must be transmitted to the commissioning agent - which may be the same entity as the discovery initiating agent, or an entity communicating with the discovery initiating agent - to allow the commissioning process for those gateways to complete.

In a particular embodiment, said comparing comprises comparing the list of neighbors of the device carrying out the comparison with the list of neighbors of said discovery initiating agent or said respective one or more gateways.

In this embodiment, the neighbor information includes information about the identity of the neighboring devices that are in range of a given device, and the degree to which the list of neighbor devices detected by any given device overlaps with the list of neighbor devices detected by the discovery initiating agent or the concerned gateway is indicative of how close the given device is to the discovery initiating agent or the concerned gateway.

In another particular embodiment, said comparing comprises comparing estimated distances of neighbors of the device carrying out the comparison with estimated distances of neighbors of said discovery initiating agent or said respective one or more gateways.

In this embodiment, the neighbor information includes information about the distance of the neighboring devices that are in range of a given device (for example, RSSI measurements, path loss measurements, or distance derived from RSSI, path loss and phase or time difference measurements, etc.), and the distances between any given device and the neighbor devices it can detect, and the distances between the discovery initiating agent or concerned gateway and the neighbor devices it can detect, are combined to determine how close the given device is to the discovery initiating agent or the concerned gateway.

In an embodiment, said determining comprises detecting at said discovery initiating agent, for each received discovery response, a signal strength value and a signal timing value, and assessing on the basis of said signal strength value and said signal timing value whether said discovery response is likely to originate from a device in the same room as said discovery initiating agent.

It is an advantage of this embodiment that the amount of signaling between the discovery initiating agent and the devices is kept to a minimum, and that information present in the physical characteristics of the discovery responses is used to determine which devices are in the same room and hence should be assigned to the same group.

In an embodiment of the method according to the present invention, said discovery initiating agent is a commissioning agent separate from said devices.

It is an advantage of this embodiment that it may be implemented in a mobile or portable device that can easily be carried from room to room for a multi-room commissioning process.

In an embodiment of the method according to the present invention, said discovery initiating agent is one of said gateways.

It is an advantage of this embodiment that the computational burden of the discovery process can be offloaded to the gateway that will eventually connect to the selected sensors.

In an embodiment, the method according to the present invention further comprises: selecting participating devices, prior to said transmitting of said discovery message; wherein devices from among said plurality of devices broadcast said primary discovery response only if they have been selected.

It is an advantage of this embodiment that devices that are physically nearby but that should not be included in the commissioning process can easily be excluded by not selecting them for commissioning.

In a particular embodiment, said selecting comprises performing an NFC message exchange between said commissioning agent and devices to be selected, or said selecting comprises interacting with a user interface of devices to be selected.

The inventor has found that NFC provides a particularly practical way of selecting devices to be included in the commissioning process.

According to an aspect of the present invention, there is provided a computer program product comprising code means configured to cause a processor to perform the steps of the discovery initiating agent in the method as described above.

According to an aspect of the present invention, there is provided a computer program product comprising code means configured to cause a processor to perform the steps of the devices in the method as described above.

The technical effects and advantages of embodiments of the computer program products according to the present invention correspond *mutatis mutandis* to those of the corresponding embodiments of the method according to the present invention.

### Brief Description of the Figures

These and other technical features and advantages of embodiments of the present invention will now be described in more details with reference to the accompanying drawings, in which:
- Figure 1 schematically illustrates a room layout with a number of gateways and sensors, to which the method according to the present invention may be applied;
- Figure 2 presents a flow chart of general embodiment of the method of selectively pairing a plurality of sensors to a gateway from among a plurality of gateways in a wireless network, according to the present invention;
- Figure 3 presents a flow chart of the sub-steps involved in the determining step, according to a distributed variant;
- Figure 4 presents a flow chart of the sub-steps involved in the determining step, according to a centralized variant;
- Figure 5 presents a message flow diagram corresponding to a part of the flow chart of Figure 4;
- Figure 6 presents a flow chart of certain steps of a multi-hop commissioning process; and
- Figure 7 illustrates several stages in a multi-hop commissioning process according to an embodiment of the present invention.

### Description of Embodiments

The term "Group Commissioning" as used herein consists of the following three processes:
- Discovery: A discovery initiating agent, e.g. a commissioning agent, discovers other devices around it with which it shall execute the Proximity Detection process;
- Proximity Detection: the discovery initiating agent calculates its proximity with other devices (sensors, gateways);
- Commissioning: a commissioning agent commissions and configures the desired group of devices, e.g., a group of a Room Controller and Call Units in a room

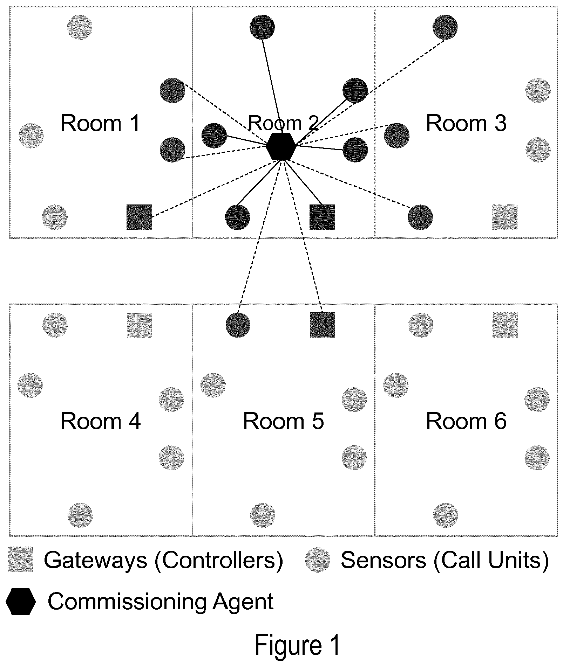

Figure 1 schematically illustrates a room layout with a number of gateways (squares) and sensors (circles), to which the method according to the present invention may be applied. Without loss of generality, 6 rooms are shown, each having a single gateway. In each room, a number of sensors are present. In a typical commissioning scenario, a technician is sent to each room to configure the devices. For the purpose of the following description of embodiments of the present invention, a technician with a discovery initiating agent (also referred to as "commissioning agent", illustrated as a hexagon) is assumed to be present in room 2.

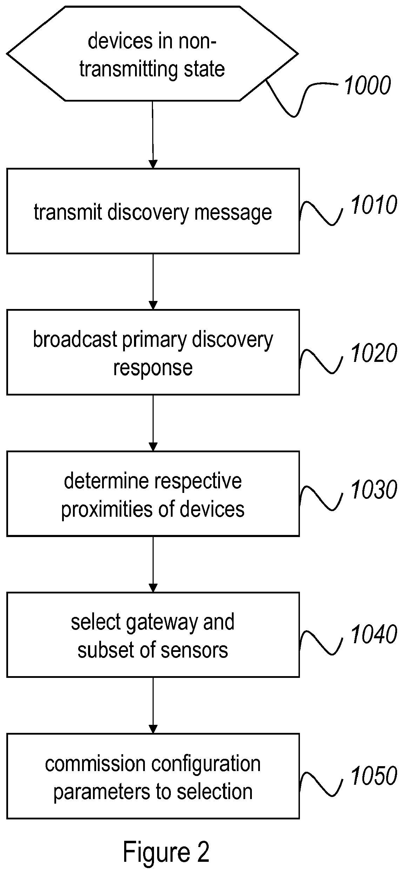

Figure 2 presents a flow chart of general embodiment of the method of selectively pairing a plurality of sensors to a gateway from among a plurality of gateways in a wireless network, according to the present invention. Although the steps of embodiments of the method according to the present invention are shown in the flow charts in a particular order, this order is not intended to be limiting, except where it is clear from the description that a particular step cannot take place until another step has been performed.

Initially, i.e. prior to the receipt of any discovery message, the devices (sensors and gateways) are kept **1000** in a non-transmitting state. The discovery initiating agent announces itself by transmitting **1010** a discovery message, typically at the initiative of the technician. In response, each of the plurality of devices that have received the discovery message, i.e. all the devices that are in range of the discovery initiating agent (indicated by a darker color in Figure 1), announces itself by broadcasting **1020** a primary discovery response, and receives discovery responses from the other devices.

The proximity of the devices (sensors and gateways) is then derived from these discovery responses. Respective proximities of said gateways to said discovery initiating agent and respective proximities of said sensors to said discovery initiating agent or one or more of said gateways, are determined **1030** based on at least said primary discovery responses.

Embodiments of the present invention are based *inter alia* on the insight of the inventor that direct measures of link distances alone (in a point-to-point way) may not be sufficiently accurate to determine a proximity map. Evaluating proximity between two devices by comparing detected network parameters - which act like a fingerprint of the locally detected network neighborhood - is expected to lead to better estimates. Even with some inaccuracy in the measures of their links with their neighbors, network parameters of nearby devices should have higher correlation than devices that are further apart or are in different rooms. The relevant network parameters of a device may include the measures of its links, e.g., RSSI, path loss, SNR, time and phase differences, or distance with its neighbors. By combining RSSI or path loss information with time and phase information, the presence of obstacles such as walls between certain pairs of devices may be deduced, thus providing a way to determine whether devices are in the same room.

This "proximity" is used to logically group the devices into one group at the discovery initiating agent by selecting **1040** a gateway and a subset of said plurality of sensors on the basis of said respective proximities; typically, the group is displayed to the technician. In Figure 1, the devices meeting the group selection criterion (in this case, all devices present in Room 2) are shown connected to the discovery initiating agent by a solid line; the remaining devices in range of the discovery initiating agent are shown connected to the discovery agent by a dashed line.

The determination of the respective proximities may involve a comparison of neighbor information collected at the devices with neighbor information collected at the discovery initiating agent. This comparison may either take place in a distributed manner or in a centralized manner.

The necessary commissioning **1050** of configuration parameters to said selected gateway and said subset of said plurality of sensors is then performed via a commissioning agent (this may be the same device as the discovery initiating agent), typically through a further action by the technician. The commissioning agent connects with gateways and sensors, uploads the required configuration, and disconnects. The sensors and gateways are then able to connect without further intervention from the technician.

In particular, the commissioning **1050** of configuration parameters to the selected devices may include the following:
- The commissioning agent uploads the required configuration to the devices. These configurations may consist of the following:
   ∘ Desired "pairings", *i.e.*, which devices shall connect with each other in this group. In the case of a nurse call system, the gateway (Room Controller) shall connect with all sensors (Call Units) in the group. These "pairings" are installed on the gateway and may also be installed on the sensors.
   ∘ Network and security credentials to allow the gateway to access the back-end network (*e.g.*, network name and security key of the Wi-Fi network).
   ∘ Device-specific information. For example, in the case of a nurse call system, a specific location (e.g., "Bed 1" or "Bed 2") may be assigned to individual call units. To enable this, the commissioning agent may use the proximity detection mechanisms described herein between the commissioning agent and a device of interest, or any other mechanism like a visual wink or audible beep to confirm the identity of the device before installing the device specific information on each device.
- The "paired" devices, e.g., the gateway and sensors, set up their secure communication channel via the commissioning agent. This may involve the commissioning agent installing a specific secret for a pair, such as a gateway-sensor pair, whereupon the pair uses this secret to derive the keys to secure the communication between them. It may also involve a secret exchange by the pair via the commissioning agent.

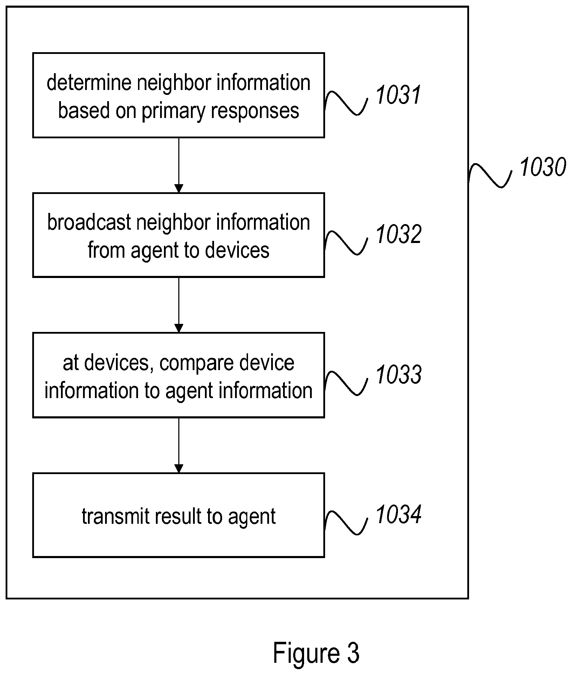

Figure 3 presents a flow chart of the sub-steps involved in the determining **1030** step, according to a distributed variant. In this variant, the determining **1030** comprises:
- at said discovery initiating agent and said plurality of devices, determining **1031** neighbor information based on said primary discovery responses;
- broadcasting **1032** said neighbor information determined at said discovery initiating agent to said plurality of devices;
- comparing **1033,** at each of said plurality of devices, said neighbor information of said respective device to said neighbor information of said discovery initiating agent; and
- transmitting **1034** a result of said comparing **1032** to said discovery initiating agent.

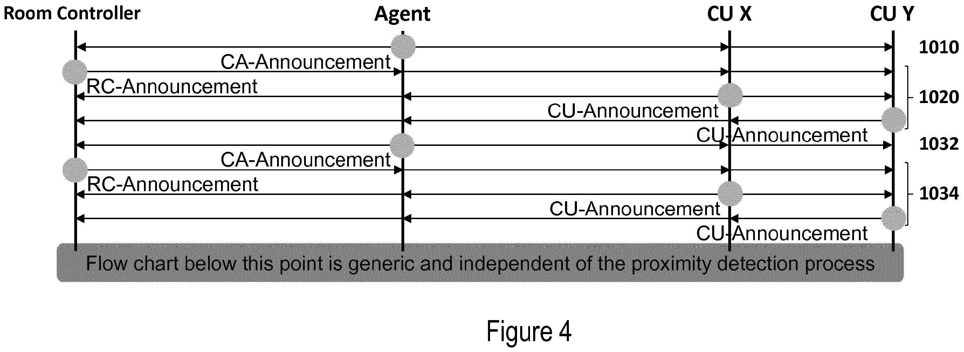

Figure 4 presents a message flow diagram corresponding to a part of the flow chart of Figure 3. When triggered by the operator, the discovery initiating agent (in this case, a commissioning agent, CA) sends a discovery message **1010** (CA-Announcement advertisements) and switches between Advertising and Scanning states. By default, sensors such as call units are initially in a Scanning State. On receiving CA-Announcements **1010** from the discovery initiating agent, call units send discovery responses **1020** (CU-Announcements) and switch between Scanning and Advertising states. Likewise, gateways such as room controllers are initially in Scanning State. On receiving CA-Announcements, room controllers send discovery responses **1020** (RC-Announcements) and switch between Advertising and Scanning states. At that stage, all devices are aware of their neighbors. The commissioning agent makes other devices aware of its neighbors **1032** to allow them to calculate their proximity with CA. Devices send their updated proximity measures in their follow-up announcements **1034.**

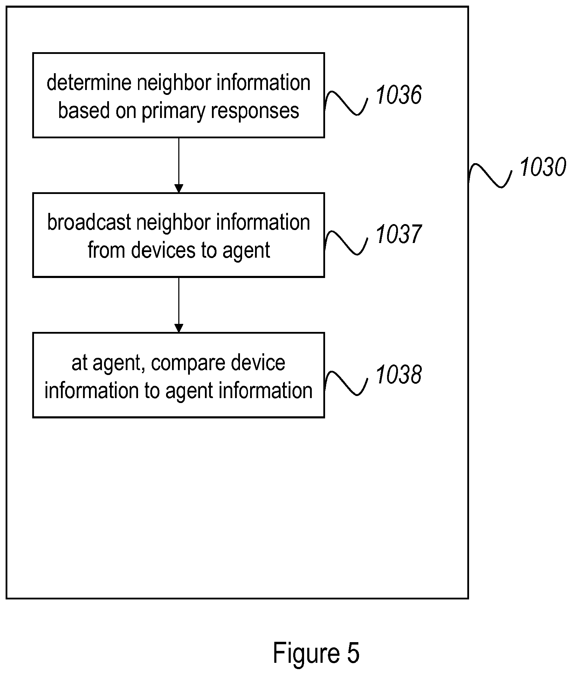

Figure 5 presents a flow chart of the sub-steps involved in the determining **1030** step, according to a centralized variant. In this variant, the determining **1030** comprises:
- at said discovery initiating agent and said plurality of devices, determining **1036** neighbor information based on said primary discovery responses;
- broadcasting **1037** said neighbor information determined at respective ones of said plurality of devices to said discovery initiating agent; and
- comparing **1038,** at said discovery initiating agent, said neighbor information of said discovery initiating agent to said neighbor information received from said plurality or devices.

In both cases, the actual comparing **1033** may comprise comparing the list of neighbors of the device for which the comparison is carried out with the list of neighbors of said discovery initiating agent, or it may comprise comparing estimated distances of neighbors of the device for which comparison is carried out with estimated distances of neighbors of said discovery initiating agent.

The basic scenario described above is expanded to cover multiple transmission hops, so as to include information about devices that are not directly in range of the discovery initiating agent.

In addition to the steps described in the context of Figure 1, the invention further comprises the following steps:
- at devices from among said plurality of devices that have not received said discovery message but that have received a primary discovery response (hop 1), broadcasting a secondary discovery response (hop 2);
- at devices from among said plurality of devices that have not received said discovery message or a primary discovery response (hop 1) but that have received a secondary discovery response (hop 2) from a gateway out of range from said discovery initiating agent that has received a primary discovery response (hop 1) from at least one sensor, broadcasting a tertiary discovery response (hop 3).

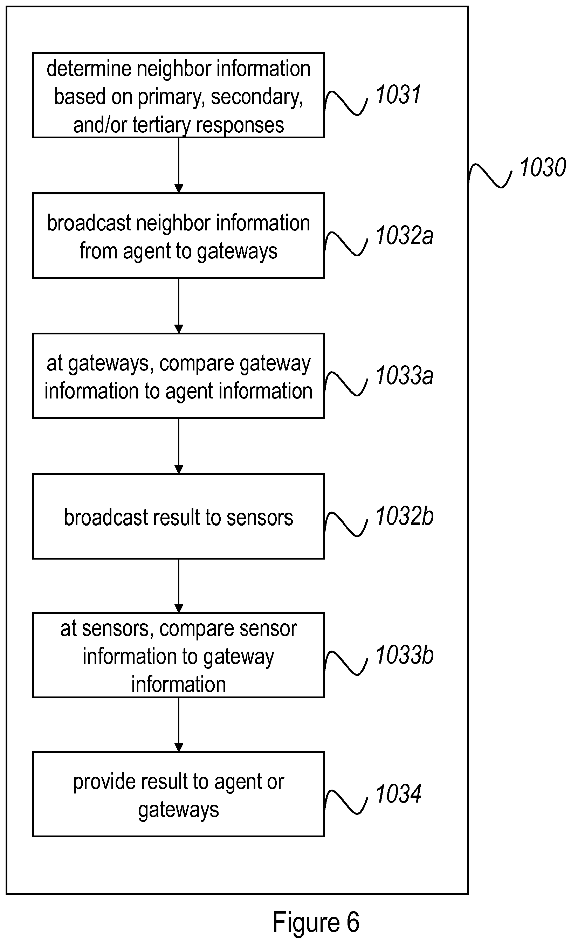

A more active role is taken by the gateway(s) within range of the discovery initiating agent, or in range of a sensor that is in range of the discovery initiating agent. The group formation may be performed by the discovery initiating agent or the gateway(s), whereupon the actual commissioning is performed by the commissioning agent. With reference to Figure 6, the determining **1030** comprises:
- at said discovery initiating agent and said plurality of devices, determining **1031** neighbor information based on said primary, secondary, and/or tertiary discovery responses;
- broadcasting **1032a** said neighbor information determined at said discovery initiating agent to gateways within range of said discovery initiating agent;
- comparing **1033a,** at each of said gateways within range of said discovery initiating agent, said neighbor information of said respective gateway to said neighbor information of said discovery initiating agent;
- broadcasting **1032b** said neighbor information determined at said gateways to sensors within range of said respective gateways;
- comparing **1033b,** at each of said sensors within range of one or more gateways, said neighbor information of said respective sensor to said neighbor information of said respective one or more gateways; and
- providing **1034** a result of said comparing **1033a/b** to said discovery initiating agent or said one or more gateways.

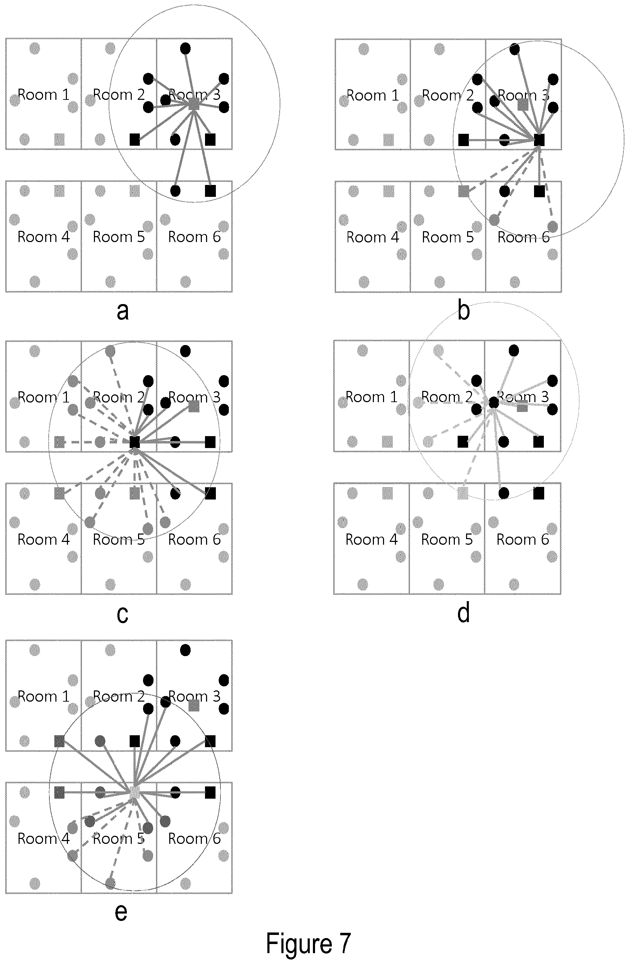

The above steps are schematically illustrated in Figure 7. In step a, a discovery initiating agent is activated in Room 3 and transmits **1010** a discovery message which is received by all the devices in Room 3 and by some nearby devices in neighboring rooms 2 and 6. Subsequently, all the devices that received the discovery message, transmit a primary discovery response **1020.** This is shown in step b for the gateway of Room 3, in step c for the gateway of Room 2 and in step d for a sensor in Room 3. In each of these examples, some of the devices that receive the primary discovery response have also received the initial discovery message (shown connected to the emitter of primary discovery responses in each case by a solid line), while other devices that receive the primary discovery response have not received the initial discovery message (shown connected to the emitter of primary discovery responses in each case by a dashed line). All devices that receive a primary discovery response and that have not received the initial discovery message will then transmit a secondary discovery response. As is shown in step e, the secondary discovery response from a gateway out of range from the discovery initiating agent that has received a primary discovery response from at least one sensor (in the example, only the gateway of Room 5) is received by devices that have also received the discovery message or a primary discovery response (shown connected to the gateway in Room 5 by a solid line) and by devices that have neither received the discovery message nor a primary discovery response (shown connected to the gateway in Room 5 by a dashed line). These devices that have neither received the discovery message nor a primary discovery response will then transmit a tertiary discovery response. This distinction allows each participating gateway to create a map of its neighbors in the network and to determine which sensors should be in its group.

The providing step **1034** may comprise transmitting, from each of said sensors, a result of said comparing to said respective one or more gateways; and transmitting, from said one or more gateways, said result of said comparing to said discovery initiating agent. Indeed, when the result of the comparing that has taken place at the sensors is provided to the respective gateways in whose range they are, this information allows the gateways to propose a group of sensors to be paired with themselves. The proposed groups must be transmitted to the commissioning agent to allow the technician to complete the commissioning process for those gateways. This transmission may take place as an automatic additional step, or it may be triggered by the technician.

In a further variant of the present invention, the determining **1030** comprises detecting at said discovery initiating agent, for each received discovery response, a signal strength value and a signal timing value, and assessing on the basis of said signal strength value and said signal timing value whether said discovery response is likely to originate from a device in the same room as said discovery initiating agent. Indeed, while the time a signal needs to cross the distance between the transmitter and the receiver is strictly proportional to the distance, the signal strength will be affected by any obstacles (such as walls) appearing in the path of the signal. Hence, any discrepancy between the distance derived from the time-of-flight (including, as the case may be, phase information) and the distance derived from the signal attenuation, may be attributed to the presence of obstacles. This information may advantageously be used to determine which devices are in the same room.

In certain embodiments, the method according to the present invention further comprises selecting participating devices, prior to the transmitting **1010** of the discovery message; devices from among said plurality of devices broadcast the primary discovery response only if they have been selected. The selecting may comprise performing an NFC message exchange between the commissioning agent and devices to be selected. During this exchange, the commissioning agent may read identification information from the device, or it may write desired identification information (e.g., intended group membership information) to the device. Generally, the commissioning agent may pre-install at this stage the configuration information described above in the context of the commissioning step **1050** of Figure 2, including a pre-shared secret allowing the devices to form groups, establish connections and derive keys to secure their pairwise communication without any further intervention from the commissioning agent.

When writing desired identification information, the commissioning agent may assign the role of discovery initiating agent to a particular gateway, which will then proceed as described above. Of course, if only the sensors of a particular room are selected, all being in range of the selected gateway, the proximity determination comes down to merely ascertaining that a discovery response message is received from each particular sensor.

Additionally or alternatively, the selecting may comprise interacting with a user interface of devices to be selected.

While the invention has been described hereinabove with reference to specific embodiments, this was done to clarify and not to limit the invention, the scope of which is determined by the accompanying claims.

## Claims

1. A method of selectively pairing a plurality of sensors to a gateway from among a plurality of gateways in a wireless network, said sensors and said gateways being collectively referred to as devices, the method comprising:
- prior to receipt of a discovery message, keeping (1000) said plurality of devices in a non-transmitting state;
- transmitting (1010) a discovery message from a discovery initiating agent;
- at each of said plurality of devices that have received said discovery message, broadcasting (1020) a primary discovery response;
- determining (1030), at said discovery initiating agent, respective proximities of said gateways to said discovery initiating agent and respective proximities of said sensors to said discovery initiating agent or one or more of said gateways, based on at least said primary discovery responses;
- selecting (1040), at said discovery initiating agent, a gateway and a subset of said plurality of sensors on the basis of said respective proximities; and
- commissioning (1050), by a commissioning agent, configuration parameters to said selected gateway and said subset of said plurality of sensors
**characterized in that** the method further comprises:
- at devices from among said plurality of devices that have not received said discovery message but that have received a primary discovery response, hop 1, broadcasting a secondary discovery response, hop 2;
- at devices from among said plurality of devices that have not received said discovery message or a primary discovery response, hop 1, but that have received a secondary discovery response, hop 2, from a gateway out of range from said discovery initiating agent that has received a primary discovery response, hop 1, from at least one sensor, broadcasting a tertiary discovery response, hop 3;
**and in that** said determining (1030) comprises:
- at said discovery initiating agent and said plurality of devices, determining (1031) neighbor information based on said primary, secondary, and/or tertiary discovery responses;
- broadcasting (1032a) said neighbor information determined at said discovery initiating agent to gateways within range of said discovery initiating agent;
- comparing (1033a), at each of said gateways within range of said discovery initiating agent, said neighbor information of said respective gateway to said neighbor information of said discovery initiating agent;
- broadcasting (1032b) said neighbor information determined at said gateways to sensors within range of said respective gateways;
- comparing (1033b), at each of said sensors within range of one or more gateways, said neighbor information of said respective sensor to said neighbor information of said respective one or more gateways; and
- providing (1034) a result of said comparing (1033a/b) to said discovery initiating agent or said one or more gateways.

2. The method according to claim 1, wherein said providing (1034) comprises:
- transmitting, from each of said devices within range of said discovery initiating agent, a result of said comparing (1033a/b) to said discovery initiating agent.

3. The method according to claim 1, wherein said providing (1034) comprises:
- transmitting, from each of said sensors, a result of said comparing (1033a/b) to said respective one or more gateways; and
- transmitting, from said one or more gateways, said result of said comparing to said discovery initiating agent.

4. The method according to any of the preceding claims, wherein said comparing (1033a/b) comprises comparing the list of neighbors of the device carrying out the comparison with the list of neighbors of said discovery initiating agent or said respective one or more gateways.

5. The method according to any of claims 1-4, wherein said comparing (1033a/b) comprises comparing estimated distances of neighbors of the device carrying out the comparison with estimated distances of neighbors of said discovery initiating agent or said respective one or more gateways.

6. The method according to claim 1, wherein said determining (1030) comprises detecting at said discovery initiating agent, for each received discovery response, a signal strength value and a signal timing value, and assessing on the basis of said signal strength value and said signal timing value whether said discovery response is likely to originate from a device in the same room as said discovery initiating agent.

7. The method according to any of the preceding claims, wherein said discovery initiating agent is said commissioning agent, which is separate from said devices.

8. The method according to any of claims 1-6, wherein said discovery initiating agent is one of said gateways.

9. The method according to any of the preceding claims, further comprising: selecting participating devices, prior to said transmitting (1010) of said discovery message; wherein devices from among said plurality of devices broadcast said primary discovery response only if they have been selected.

10. The method according to claim 9, wherein said selecting comprises performing an NFC message exchange between said commissioning agent and devices to be selected, or said selecting comprises interacting with a user interface of devices to be selected.

11. A computer program product comprising code means configured to cause a processor associated with a discovery initiating device to perform the steps of the discovery initiating agent in the method according to any of the preceding claims.

12. A computer program product comprising code means configured to cause a processor associated with a device to perform the steps of the devices in the method according to any of the claims 1-10.

## Patentansprüche

1. Verfahren zur selektiven Paarung einer Vielzahl von Sensoren mit einem Gateway aus einer Vielzahl von Gateways in einem drahtlosen Netzwerk, wobei die Sensoren und die Gateways zusammen als Vorrichtungen bezeichnet werden, wobei das Verfahren umfasst:
- vor dem Empfang einer Discovery-Nachricht, Halten (1000) der Vielzahl von Vorrichtungen in einem Nichtübertragungszustand;
- Übertragen (1010) einer Discovery-Nachricht von einem Discovery-Auslöseagenten;
- an jeder der Vielzahl von Vorrichtungen, welche die Discovery-Nachricht empfangen haben, Rundsenden (1020) einer primären Discovery-Antwort;
- Bestimmen (1030), an dem Discovery-Auslöseagenten, jeweiliger Nähen der Gateways zu dem Discovery-Auslöseagenten und jeweiliger Nähen der Sensoren zu dem Discovery-Auslöseagenten oder einem oder mehreren der Gateways basierend auf wenigstens den primären Discovery-Antworten;
- Auswählen (1040), an dem Discovery-Auslöseagenten, eines Gateways und einer Teilmenge der Vielzahl von Sensoren auf der Basis der jeweiligen Nähen; und
- Übermitteln (1050), durch einen Inbetriebnahme-Agenten, von Konfigurationsparametern zur Inbetriebnahme an das ausgewählte Gateway und die Teilmenge der Vielzahl von Sensoren,
**dadurch gekennzeichnet, dass** das Verfahren ferner umfasst:
- an Vorrichtungen aus der Vielzahl von Vorrichtungen, welche die Discovery-Nachricht nicht empfangen haben, welche jedoch eine primäre Discovery-Antwort, hop 1, empfangen haben, Rundsenden einer sekundären Discovery-Antwort, hop 2;
- an Vorrichtungen aus der Vielzahl von Vorrichtungen, welche nicht die Discovery-Nachricht oder eine primäre Discovery-Antwort, hop 1, empfangen haben, welche jedoch eine sekundäre Discovery-Antwort, hop 2, von einem Gateway außer Reichweite des Discovery-Auslöseagenten empfangen haben, welches eine primäre Discovery-Antwort, hop 1, von wenigstens einem Sensor empfangen hat, Rundsenden einer tertiären Discovery-Antwort, hop 3;
und dadurch, dass das Bestimmen (1030) umfasst:
- an dem Discovery-Auslöseagenten und der Vielzahl von Vorrichtungen, Bestimmen (1031) von Nachbarinformationen basierend auf den primären, sekundären und/oder tertiären Discovery-Antworten;
- Rundsenden (1032a) der Nachbarinformationen, die an dem Discovery-Auslöseagenten bestimmt wurden, an Gateways in Reichweite des Discovery-Auslöseagenten;
- Vergleichen (1033a), an jedem der Gateways in Reichweite des Discovery-Auslöseagenten, der Nachbarinformationen des jeweiligen Gateways mit den Nachbarinformationen des Discovery-Auslöseagenten;
- Rundsenden (1032b) der Nachbarinformationen, die an den Gateways bestimmt wurden, an Sensoren in Reichweite der jeweiligen Gateways;
- Vergleichen (1033b), an jedem der Sensoren in Reichweite eines oder mehrerer Gateways, der Nachbarinformationen des jeweiligen Sensors mit den Nachbarinformationen der jeweiligen ein oder mehreren Gateways; und
- Bereitstellen (1034) eines Ergebnisses des Vergleichens (1033a/b) an den Discovery-Auslöseagenten oder die ein oder mehreren Gateways.

2. Verfahren nach Anspruch 1, wobei das Bereitstellen (1034) umfasst:
- Übertragen, von jeder der Vorrichtungen in Reichweite des Discovery-Auslöseagenten, eines Ergebnisses des Vergleichens (1033a/b) an den Discovery-Auslöseagenten.

3. Verfahren nach Anspruch 1, wobei das Bereitstellen (1034) umfasst:
- Übertragen, von jedem der Sensoren, eines Ergebnisses des Vergleichens (1033a/b) an die jeweiligen ein oder mehreren Gateways; und
- Übertragen, von den ein oder mehreren Gateways, des Ergebnisses des Vergleichens an den Discovery-Auslöseagenten.

4. Verfahren nach einem der vorhergehenden Ansprüche, wobei das Vergleichen (1033a/b) das Vergleichen der Liste von Nachbarn der den Vergleich durchführenden Vorrichtung mit der Liste von Nachbarn des Discovery-Auslöseagenten oder der jeweiligen ein oder mehreren Gateways umfasst.

5. Verfahren nach einem der Ansprüche 1-4, wobei das Vergleichen (1033a/b) das Vergleichen geschätzter Entfernungen von Nachbarn der den Vergleich durchführenden Vorrichtung mit geschätzten Entfernungen von Nachbarn des Discovery-Auslöseagenten oder der jeweiligen ein oder mehreren Gateways umfasst.

6. Verfahren nach Anspruch 1, wobei das Bestimmen (1030) das Erfassen, an dem Discovery-Auslöseagenten für jede empfangene Discovery-Antwort, eines Signalstärkewertes und eines Signallaufzeitwertes und das Beurteilen, auf der Basis des Signalstärkewertes und des Signallaufzeitwertes, ob die Discovery-Antwort wahrscheinlich von einer Vorrichtung in demselben Raum wie der Discovery-Auslöseagent stammt, umfasst.

7. Verfahren nach einem der vorhergehenden Ansprüche, wobei der Discovery-Auslöseagent der Inbetriebnahme-Agent ist, welcher von den Vorrichtungen getrennt ist.

8. Verfahren nach einem der Ansprüche 1-6, wobei der Discovery-Auslöseagent eines der Gateways ist.

9. Verfahren nach einem der vorhergehenden Ansprüche, welches ferner umfasst: Auswählen teilnehmender Vorrichtungen vor dem Übertragen (1010) der Discovery-Nachricht; wobei Vorrichtungen aus der Vielzahl von Vorrichtungen die primäre Discovery-Antwort nur rundsenden, falls sie ausgewählt worden sind.

10. Verfahren nach Anspruch 9, wobei das Auswählen das Durchführen eines NFC-Nachrichtenaustauschs zwischen dem Inbetriebnahme-Agenten und auszuwählenden Vorrichtungen umfasst oder das Auswählen das Interagieren mit einer Benutzerschnittstelle von auszuwählenden Vorrichtungen umfasst.

11. Computerprogrammprodukt, welches Codemittel umfasst, die dafür ausgelegt sind zu bewirken, dass ein Prozessor, der einer Discovery-Auslösevorrichtung zugeordnet ist, die Schritte des Discovery-Auslöseagenten in dem Verfahren gemäß einem der vorhergehenden Ansprüche ausführt.

12. Computerprogrammprodukt, welches Codemittel umfasst, die dafür ausgelegt sind zu bewirken, dass ein Prozessor, der einer Vorrichtung zugeordnet ist, die Schritte der Vorrichtungen in dem Verfahren gemäß einem der Ansprüche 1-10 ausführt.

## Revendications

1. Procédé pour appareiller de manière sélective une pluralité de capteurs à une passerelle parmi une pluralité de passerelles dans un réseau sans fil, lesdits capteurs et lesdites passerelles étant collectivement mentionnées en tant que dispositifs, le procédé comprenant :
- avant la réception d'un message de découverte, le maintien (1000) de ladite pluralité de dispositifs dans un état de non-émission ;
- l'émission (1010) d'un message de découverte à partir d'un agent d'amorçage de découverte ;
- au niveau de chacun de ladite pluralité de dispositifs qui ont reçu ledit message de découverte, la diffusion (1020) d'une réponse de découverte primaire ;
- la détermination (1030), au niveau dudit agent d'amorçage de découverte, de proximités respectives desdites passerelles dudit agent d'amorçage de découverte et de proximités respectives desdits capteurs audit agent d'amorçage de découverte ou une ou plusieurs desdites passerelles, sur la base au moins desdites réponses de découverte primaires ;
- la sélection (1040), au niveau dudit agent d'amorçage de découverte, d'une passerelle et d'un sous-ensemble de ladite pluralité de capteurs sur la base desdites proximités respectives ; et
- mise en service (1050), par un agent de mise en service, de paramètres de configuration pour ladite passerelle sélectionnée et ledit sous-ensemble de ladite pluralité de capteurs
**caractérisé en ce que** le procédé comprend en outre :
- au niveau de dispositifs parmi ladite pluralité de dispositifs qui n'ont pas reçu ledit message de découverte, mais qui ont reçu une réponse de découverte primaire, hop 1, la diffusion d'une réponse de découverte secondaire, hop 2 ;
- au niveau de dispositifs parmi ladite pluralité de dispositifs qui n'ont pas reçu ledit message de découverte ou une réponse de découverte primaire, hop 1, mais qui ont reçu une réponse de découverte secondaire, hop 2, en provenance d'une passerelle hors de portée dudit agent d'amorçage de découverte qui a reçu une réponse de découverte primaire, hop 1, en provenance d'au moins un capteur, la diffusion d'une réponse de découverte tertiaire, hop 3 ;
**et en ce que** ladite détermination (1030) comprend :
- au niveau dudit agent d'amorçage de découverte et de ladite pluralité de dispositifs, la détermination (1031) d'informations voisines sur la base desdites réponses de découverte primaires, secondaires, et/ou tertiaires ;
- la diffusion (1032a) desdites informations voisines déterminées au niveau dudit agent d'amorçage de découverte auxdites passerelles à portée dudit agent d'amorçage de découverte ;
- la comparaison (1033a), au niveau de chacune desdites passerelles à portée dudit agent d'amorçage de découverte, desdites informations voisines de ladite passerelle respective auxdites informations voisines dudit agent d'amorçage de découverte ;
- la diffusion (1032b) desdites informations voisines déterminées au niveau desdites passerelles vers des capteurs à portée desdites passerelles respectives ;
- la comparaison (1033b), au niveau de chacun desdits capteurs à portée d'une ou plusieurs passerelles, desdites informations voisines dudit capteur respectif auxdites informations voisines desdites une ou plusieurs passerelles respectives ; et
- la fourniture (1034) d'un résultat de ladite comparaison (1033a/b) audit agent d'amorçage de découverte ou auxdites une ou plusieurs passerelles.

2. Procédé selon la revendication 1, dans lequel ladite fourniture (1034) comprend :
- l'émission, à partir de chacun desdits dispositifs à portée dudit agent d'amorçage de découverte, d'un résultat de ladite comparaison (1033a/b) vers ledit agent amorçage de découverte.

3. Procédé selon la revendication 1, dans lequel ladite fourniture (1034) comprend :
- l'émission, à partir de chacun desdits capteurs, d'un résultat de ladite comparaison (1033a/b) vers lesdites une ou plusieurs passerelles respectives ; et
- l'émission, à partir desdites une ou plusieurs passerelles, dudit résultat de ladite comparaison vers ledit agent d'amorçage de découverte.

4. Procédé selon l'une quelconque des revendications précédentes, dans lequel ladite comparaison (1033a/b) comprend la comparaison de la liste de voisins du dispositif effectuant la comparaison à la liste de voisins dudit agent d'amorçage de découverte ou desdites une ou plusieurs passerelles respectives.

5. Procédé selon l'une quelconque des revendications 1 à 4, dans lequel ladite comparaison (1033a/b) comprend la comparaison de distances évaluées de voisins du dispositif effectuant la comparaison à des distances évaluées de voisins dudit agent d'amorçage de découverte ou desdites une ou plusieurs passerelles respectives.

6. Procédé selon la revendication 1, dans lequel ladite détermination (1030) comprend la détection au niveau dudit agent d'amorçage de découverte, pour chaque réponse de découverte reçue, d'une valeur d'intensité de signal et d'une valeur de cadencement de signal, et l'évaluation sur la base de ladite valeur d'intensité de signal et de ladite valeur de cadencement de signal si ladite réponse de découverte est susceptible de provenir d'un dispositif dans la même pièce que ledit agent d'amorçage de découverte.

7. Procédé selon l'une quelconque des revendications précédentes, dans lequel ledit agent d'amorçage de découverte est ledit agent de mise en service, qui est distinct desdits dispositifs.

8. Procédé selon l'une quelconque des revendications 1 à 6, dans lequel ledit agent d'amorçage de découverte est l'une desdites passerelles.

9. Procédé selon l'une quelconque des revendications précédentes, comprenant en outre : la sélection de dispositifs participants, avant ladite émission (1010) dudit message de découverte ; dans lequel des dispositifs parmi ladite pluralité de dispositifs diffusent ladite réponse de découverte primaire seulement s'ils ont été sélectionnés.

10. Procédé selon la revendication 9, dans lequel ladite sélection comprend l'exécution d'un échange de message NFC entre ledit agent de mise en service et des dispositifs à sélectionner, ou ladite sélection comprend une interaction avec une interface utilisateur de dispositifs à sélectionner.

11. Produit formant programme informatique comprenant un moyen formant code configuré pour amener un processeur associé à un dispositif d'amorçage de découverte à effectuer les étapes de l'agent d'amorçage de découverte dans le procédé selon l'une quelconque des revendications précédentes.

12. Produit formant programme informatique comprenant un moyen formant code configuré pour amener un processeur associé à un dispositif à effectuer les étapes des dispositifs dans le procédé selon l'une quelconque des revendications 1 à 10.
